Europäisches Patentamt

European Patent Office

Office européen des brevets

(19)

(11) Veröffentlichungsnummer: **0 396 941**

**A2**

(12) # EUROPÄISCHE PATENTANMELDUNG

(21) Anmeldenummer: **90107318.9**

(22) Anmeldetag: **18.04.90**

(51) Int. Cl.5: **B29C 67/14, B29C 31/08**

(30) Priorität: **11.05.89 DE 3915380**

(43) Veröffentlichungstag der Anmeldung:
**14.11.90 Patentblatt 90/46**

(84) Benannte Vertragsstaaten:
**DE ES FR IT SE**

(71) Anmelder: **KRUPP MASCHINENTECHNIK GESELLSCHAFT MIT BESCHRÄNKTER HAFTUNG**
**Helenenstrasse 149**
**D-4300 Essen 1(DE)**

(72) Erfinder: **Brüssel, Richard, Dipl.-Ing.**
**Hauptstrasse 106**
**D-7519 Sulzfeld(DE)**

(54) **Einrichtung zur Handhabung von Pressmassen aus Faserverbundwerkstoffen.**

(57) Zur Verbesserung der Handhabung von Preß-massen aus Faserverbundwerkstoffen, insbesondere zur Ablage von klebrigen Harzmatten in Preßwerk-zeugen, wird eine mit einem in lotrechter und waa-gerechter Richtung beweglichen Tragrechen ausge-stattete Handhabungseinrichtung vorgeschlagen, die im übrigen folgendermaßen ausgestaltet ist:
der Tragrechen (12) ist gemeinsam mit einem Ab-streifrechen (7) am Vorderabschnitt eines Schwen-krahmens (4) angebracht, der um eine Horizontal-achse (5) drehbar an einem zumindest in waagerechter Richtung verfahrbaren Schlitten (1) abge-stützt ist. Die von den Zinken (7b) des Abstreifre-chens (7) gebildete Ebene liegt außerhalb der Ebene der Zinken (12b) des Tragrechens (12), die entgegen der Richtung der Transportbewegung hinter die Zin-ken des Abstreifrechens zurückziehbar sind.

FIG.1

EP 0 396 941 A2

## Einrichtung zur Handhabung von Preßmassen aus Faserverbundwerkstoffen

Die Erfindung betrifft eine Einrichtung zur Handhabung von Preßmassen aus Faserverbundwerkstoffen, insbesondere zur Ablage von klebrigen Harzmatten in Preßwerkzeugen, mit einem in lotrechter und waagerechter Richtung beweglichen Tragrechen.

Bei der Handhabung (Aufnehmen, Paketieren, Transportieren, Ablegen) von Preßmassen aus Faserverbundwerkstoffen, aus denen durch einen Preß- und Aushärtevorgang Preßteile hergestellt werden, kommen üblicherweise Nadelgreifer, Hakengreifer, Sauggreifer oder Rollbandträger zum Einsatz.

Diese Handhabungsgeräte weisen zumindest einen der nachfolgend angegebenen Nachteile auf: sie sind technisch aufwendig, verschmutzungsempfindlich, beeinträchtigen die Qualität des herzustellenden Preßteils bzw. ermöglichen allenfalls mit zusätzlichem Aufwand die Handhabung einteiliger -also nicht aus mehreren Schichten aufgebauter -Preßmassen.

Ein nicht dem vorbekannten Stand der Technik zuzurechnender Lösungsvorschlag besteht darin, die durch Unterteilen einer Harzmattenbahn in Mattenstreifen hergestellte Preßmasse auf einem in lotrechter und waagerechter Richtung beweglichen Tragrechen abzulegen und mit diesem der Weiterverarbeitung zuzuführen.

Der Erfindung liegt die Aufgabe zugrunde, eine betriebssichere, verschmutzungsunempfindliche Handhabungseinrichtung zu entwickeln, die es ermöglicht, auch klebrige, mehrschichtige Preßmassen aufzunehmen, weiterzubefördern und erforderlichenfalls mit beachtlicher Genauigkeit abzulegen. Insbesondere bei der Ablage der Preßmasse im Preßwerkzeug ist im Hinblick auf die Reproduzierbarkeit des Preßvorgangs und die gleichbleibende Qualität des Preßteils eine hohe Genauigkeit anzustreben.

Die gestellte Aufgabe wird durch eine Handhabungseinrichtung mit den Merkmalen des Anspruchs 1 gelöst. Der Grundgedanke der Erfindung besteht danach darin, einen Tragrechen mit einem dazu geneigt oder quer ausgerichteten Abstreifrechen zu einer schwenkbaren Einheit zusammenzufassen und den Tragrechen bezüglich des Abstreifrechens zurückziehbar auszubilden. Der Erfindungsgegenstand geht dabei von der Erkenntnis aus, daß bei Verwendung eines Tragrechens als Kontaktkraft zwischen den Tragrechen-Zinken und der Preßmasse (beispielsweise in Gestalt einer klebrigen Harzmattenbahn oder eines klebrigen Harzmattenpaketes) lediglich deren Eigengewicht wirksam wird. Dies ist deshalb von Vorteil, weil der Verschmutzungsgrad der Handhabungseinrichtung in erheblichem Umfang von der auf die Preßmasse ausgeübten Kontaktkraft abhängig ist.

Das Zusammenwirken des Abstreifrechens und des Tragrechens ermöglicht es, dessen Lage an die Abmessungen der Preßmasse anzupassen und diese - am Abstreifrechen in Anlage gehalten - mit hoher Genauigkeit an der gewünschten Stelle abzulegen.

Zweckmäßigerweise sind die Abstreifrechen-Zinken zu denjenigen des Tragrechens versetzt angeordnet (Anspruch 2); dies ermöglicht erforderlichenfalls eine Anordnung, bei welcher die Endabschnitte der Abstreifrechen-Zinken - abgesehen allenfalls von der Rückziehstellung des Tragrechens - zwischen dessen Zinken liegen (Anspruch 3). Durch das Eintauchen der Abstreifrechen-Zinken in den Bereich zwischen den Tragrechen-Zinken wird sichergestellt, daß die nachgiebige Preßmasse sich in jedem Falle in der gewünschten Weise an den Abstreifrechen-Zinken abstützt.

Bei einer bevorzugten Ausführungsform des Erfindungsgegenstandes sind die Zinken des Abstreifrechens zu denjenigen des Tragrechens senkrecht ausgerichtet (Anspruch 4); abhängig von den Betriebsverhältnissen kann jedoch auch eine Anordnung zur Anwendung kommen, bei welcher die Zinken der beiden Rechen - in der Seitenansicht gesehen - miteinander einen spitzen oder einen stumpfen Winkel einschließen.

Der Einsatzbereich der Handhabungseinrichtung läßt sich dadurch vergrößert, daß der Abstreifrechen stufenlos in unterschiedlichen Stellungen an dem auch den Tragrechen abstützenden Schwenkrahmen feststellbar ist (Anspruch 5). Dies läßt sich insbesondere dadurch verwirklichen, daß der Abstreifrechen über eine mit Feststellschrauben versehene Gleitführung mit dem Schwenkrahmen in Verbindung steht.

Der Erfindungsgegenstand ist dadurch weiter ausgestaltet, daß der Tragrechen an Führungsstangen gehalten ist, die in Längsrichtung beweglich an dem Schwenkrahmen gelagert mit einem auch an diesem angreifenden Rechenantrieb ausgestattet sind (Anspruch 6). Bei Inbetriebnahme des Rechenantriebs führt der Tragrechen an dem Schwenkrahmen eine geradlinige Ausfahr- bzw. Rückziehbewegung aus. Vorzugsweise ist der Tragrechen mittels eines Druckluftzylinders zurückziehbar, dessen Kolben über einen Druckspeicher schlagartig mit Druckluft beaufschlagt werden kann (Anspruch 7). Die schlagartige Rückziehbewegung ermöglicht das Freisetzen der bis dahin vom Tragrechen gehaltenen Preßmasse ohne nennenswerte Verformung und Lageänderung.

Die Rückziehbewegung des Kolbens kann dabei in einfacher Weise dadurch abgebremst werden, daß die Austrittsöffnung der Ausschubseite zu einem vorgegebenen Zeitpunkt geschlossen wird.

Die zur handhabende Preßmasse läßt sich - insbesondere vor der Ablage im Preßwerkzeug - in einfacher Weise dadurch vorverformen, daß die Oberkanten zumindest der Tragrechen-Zinken quer zur Längserstreckung des Tragrechens miteinander eine gekrümmte Fläche beschreiben (Anspruch 8).

Die Verschmutzungsneigung und die Haftwirkung der Zinken der beiden Rechen kann durch Beschichten mit PTFE herabgesetzt werden (Anspruch 9).

Die Arbeitsgenauigkeit der Handhabungseinrichtung kann dadurch verbessert werden, daß die Zinken des Tragrechens zumindest teilweise soweit voneinander entfernt liegen, daß der Durchhang der Preßmasse zwischen den betreffenden Zinken größer ist als die Zinkenhöhe (Anspruch 10). Diese Ausgestaltung, die auch bei Handhabungseinrichtungen mit lediglich einem Tragrechen zur Anwendung kommen kann, ist insofern von Vorteil , als die Preßmasse -beispielsweise während der Ablage im Preßwerkzeug -bereits vor dem Freisetzen vom Tragrechen die in Frage kommende Auflagefläche berührt und dort zumindest punkt- oder linienförmig anhaftet mit der Folge, daß die Gefahr einer unerwünschten Lageänderung während der Rückziehbewegung des Tragrechens weiter herabgesetzt wird.

Bei einer besonders vorteilhaften Ausführungsform des Erfindungsgegenstandes ist die Stellung des Abstreifrechens bezüglich des Tragrechens über einen Positionierantrieb einstellbar (Anspruch 11).

Durch dessen Betätigung kann die Handhabungseinrichtung mit hoher Lagegenauigkeit nacheinander Preßmassen (beispielsweise Harzmattenstreifen ) mit unterschiedlicher Breite aufnehmen, wobei sich die Stellung des Abstreifrechens ferngesteuert und/oder automatisch anpassen läßt.

Die Erfindung wird nachfolgend anhand eines in der Zeichnung stark schematisiert dargestellten Ausführungsbeispiels erläutert.

Es zeigen:

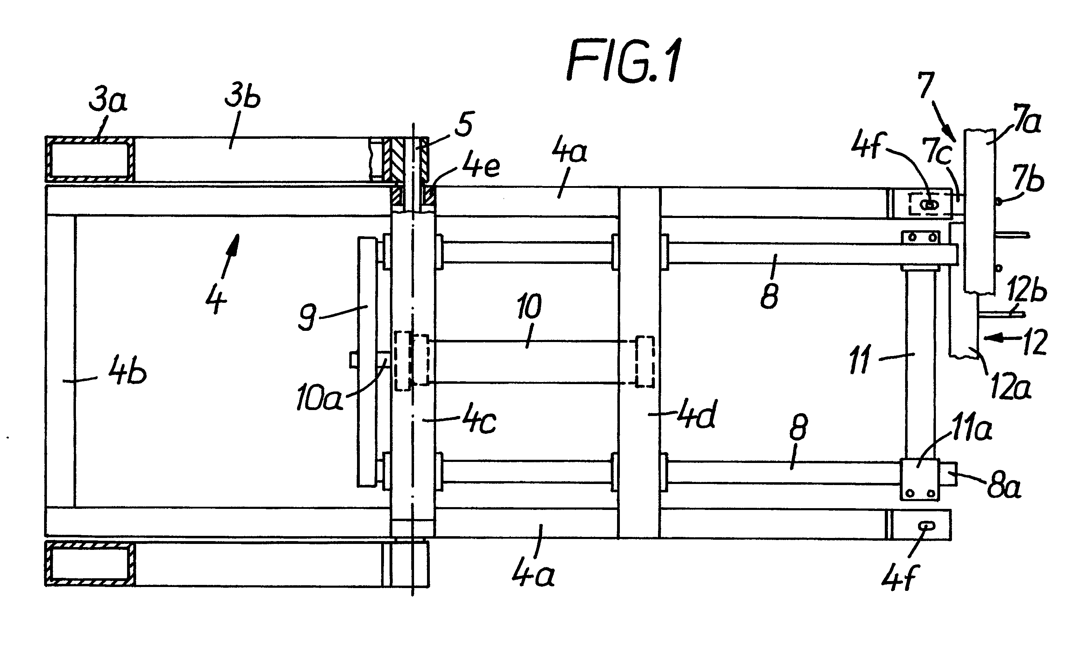

Fig. 1 eine Draufsicht auf die neu vorgeschlagene Handhabungseinrichtung mit teilweise geschnittenem Schlitten (ohne den in Fig. 2 dargestellten Schwenkantrieb),

Fig. 2. eine teilweise geschnittene Seitenansicht der Handhabungseinrichtung gemäß Fig. 1 und

Fig. 3 als Schemabild den Durchhang der Preßmasse an einem Tragrechen, dessen Zinken zueinander in unterschiedlichen Abständen angeordnet sind.

Die Handhabungseinrichtung ist an einem Schlitten 1 mit einem kastenförmigen Querträger 2 gehalten, an dem seitlich zwei Winkelträger 3 befestigt sind; diese setzen sich jeweils aus einem (in der Darstellung) lotrechten Kastenträger 3a und einem waagerechten Kastenträger 3b zusammen.

Unterhalb des Querträgers 2 ist zwischen den Winkelträgern 3 ein Schwenkrahmen 4 beweglich gehalten, der sich im wesentlichen aus zwei Längsarmen 4a und drei mit Abstand aufeinanderfolgenden Querarmen 4b, 4c bzw. 4d zusammensetzt. Die Drehverbindung zwischen dem Schwenkrahmen 4 und dem Schlitten 1 besteht aus an den Teilen 3b befestigten Lagerbolzen 5, an denen sich der mittlere Querarm 4c über seitliche Lagerkonsolen 4e abstützt.

Der Schwenkantrieb, über den sich der Schwenkrahmen 4 in der gewünschten Weise ausrichten läßt, besteht aus einem Schwenkzylinder 6, der einerseits unterhalb des Querträgers 2 an den Schlitten 1 und andererseits an den linken Querarm 4b des Schwenkrahmens 4 angelenkt ist. Das Ausfahren des Schwenkzylinders 6 führt also dazu, daß der Schwenkrahmen 4 eine Bewegung im Gegenuhrzeigersinn um die Lagerbolzen 5 ausführt. Auf der vom Schlitten 1 abgewandten Seite ist der Schwenkrahmen 4 mit einem Abstreifrechen 7 ausgestattet, der sich aus einem querliegenden Hohlkasten 7a und an dessen Vorderseite befestigten, nach unten gerichteten Zinken 7b zusammensetzt.

Der Hohlkasten 7a stützt sich über an seiner Rückseite angeordnete Anschlußstücke 7c in den Längsarmen 4a ab. Die Lage des Abstreifrechens bezüglich des Schwenkrahmens 4 läßt sich nach Lösen nicht dargestellter Einstellschrauben verändern, die durch Langlöcher 4f der Längsarme hindurchgreifend mit den Anschlußstücken 7c verspannbar sind.

Zwischen den Längsarmen 4a stützten sich an den Querarmen 4c und 4d in Längsrichtung beweglich zwei Führungsstangen 8 ab, an denen auf der dem Schlitten 1 zugewandten Seite außerhalb des mittleren Querarms 4c ein Antriebshebel 9 angebracht ist. Dieser ist über die Kolbenstange 10a eines Rechenantriebs in Gestalt eines Druckluftzylinders 10 hin und her verfahrbar, wobei die beiden Führungsstangen 8 mitgeführt werden.

Im Bereich der dem Abstreifrechen zugewandten Endabschnitte 8a ist an den Führungsstangen über Klemmbuchsen 11a ein Querarm 11 lösbar und verschiebbar gehalten, der einen Tragrechen 12 bestehend aus einem querliegenden Hohlkasten 12a und (in der Darstellung) waagerecht ausgerichteten Zinken 12b trägt.

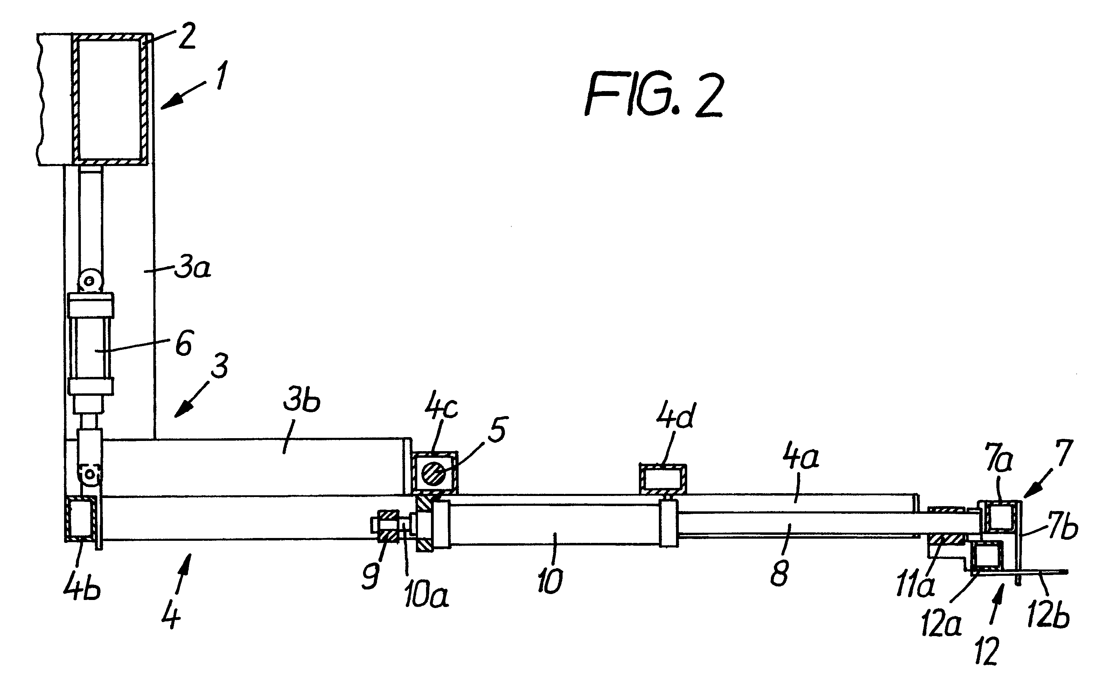

Die Befestigung des Tragrechens 12 über die Klemmbuchsen 11a gestattet es, die Lage des Tragrechens 12 unabhängig von einer Betätigung des Druckluftzylinders 10 bezüglich des Abstreifrechens 7 zu verändern. Abgesehen davon, daß die Zinken 7b und 12b senkrecht aufeinander stehen, sind sie - in der Draufsicht gesehen - zueinander versetzt angeordnet. Die Endabschnitte der Zinken 7b können daher (wie in Fig. 2 dargestellt) zwischen den Zinken 12b und unterhalb dieser liegen.

Das Zusammenwirken des Abstreifrechens 7 und des Tragrechens 12 gestattet es, die zu handhabende Preßmasse aufzunehmen, durch Anlage an den Zinken 7b zu positionieren und durch Zurückziehen des Tragrechens 12 bei feststehendem Abstreifrechen 7 gezielt - beispielsweise in einem Preßwerkzeug -abzulegen.

Der Rechenantrieb ist dabei vorzugsweise derart ausgestaltet und geschaltet, daß der Druckluftzylinder 10 für den Rückziehvorgang des Tragrechens 12 über einen nicht dargestellten Druckluftspeicher schlagartig mit Druckluft beaufschlagt wird; auf diese Weise läßt sich die an den Zinken 7b des Abstreifrechens gehaltene Preßmasse im wesentlichen ohne unerwünschte Lageänderung vom Tragrechen freisetzen. Die die Rückziehbewegung verursachende Ausfahrbewegung der Kolbenstange 10a läßt sich dabei in einfacher Weise dadurch abbremsen, daß zu gegebener Zeit, nach Unterbrechen der Druckluftzufuhr, die der Ausschubseite zugeordnete Austrittsöffnung verschlossen wird; auf der zunächst drucklosen Ausschubseite des Druckluftzylinders 10 baut sich demzufolge ein der Ausfahrbewegung entgegenwirkendes Luftpolster auf.

Die Zinken 7b und 12 b sind mit PTFE beschichtet, um ihre Verschmutzungsneigung und Haftwirkung herabzusetzen.

Im Rahmen der erfindungsgemäßen Lehre können auch andersartig ausgebildete Rechen zum Einsatz kommen; insbesondere können die zugehörigen Zinken zueinander schräggestellt sein. Darüber hinaus läßt sich durch geeignete Anordnung der Zinken -insbesondere der Zinken des Tragrechens - eine Vorverformung der Preßmasse im Hinblick auf den nachfolgenden Bearbeitungsschritt herbeiführen.

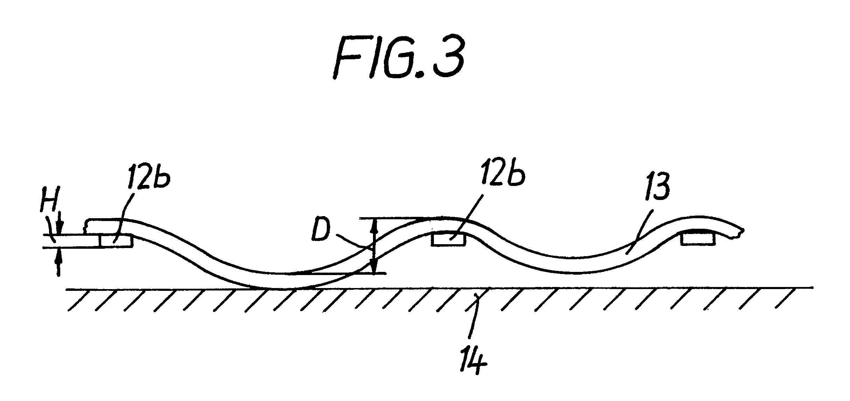

In dem Schemabild gemäß Fig. 3 ist eine Anordnung der Zinken 12b des Tragrechens 12 dargestellt, welche die gezielte Ablage einer klebrigen Preßmasse 13 (in Gestalt eines Harzmattenstreifens) auf dem Unterteil 14 eines Preßwerkzeugs erleichtern soll.

Die gegenseitigen Abstände der benachbarten Zinken 12b sind dabei so bemessen, daß der Durchhang D der Preßmasse zumindest an einer Stelle größer ist als die Höhe H der Zinken. Auf diese Weise kommt die Preßmasse bei der Annäherung des Tragrechens an das Werkzeugunterteil 14 an diesem zur Anlage, während die Zinken 12b sich noch in ausreichender Entfernung oberhalb des Werkzeugunterteils befinden. Durch die mit der Anlage am Werkzeugunterteil verbundene Haftwirkung wird die Gefahr herabgesetzt, daß die Rückziehbewegung der Zinken 12b eine unerwünschte Verschiebung der Preßmasse 13 bezüglich des Werkzeugunterteils 14 zur Folge hat.

Die Auswirkung der unterschiedlichen Abstandsbemessung ist ohne weiteres erkennbar: der Abstand zwischen den beiden in der Darstellung links liegenden Zinken 12b führt zu der bereits erwähnten Anlage der Preßmasse 13 am Werkzeugunterteil; im Gegensatz dazu ist der Abstand zwischen den (von links gesehen) zweiten und dritten Zinken 12b derart ausgebildet, daß die Preßmasse in diesem Bereich mit Abstand oberhalb des Werkzeugunterteils liegt.

Die vorstehenden Erläuterungen lassen erkennen, daß die in Rede stehende Ausgestaltung eines Tragrechens die gezielte Ablage einer insbesondere klebrigen Preßmasse gestattet, und zwar unabhängig davon, in welcher Weise die Handhabungseinrichtung im übrigen ausgebildet ist.

## Ansprüche

1. Einrichtung zur Handhabung von Preßmassen aus Faserverbundwerkstoffen, insbesondere zur Ablage von klebrigen Harzmatten in Preßwerkzeugen, mit einem in lotrechter und waagerechter Richtung beweglichen Tragrechen, **dadurch gekennzeichnet,**
- daß der Tragrechen (12) gemeinsam mit einem Abstreifrechen (7) am Vorderabschnitt eines Schwenkrahmens (4) angebracht ist, der um eine Horizontalachse (5) drehbar an einem zumindest in waagerechter Richtung verfahrbaren Schlitten (1) abgestützt ist;
- daß die von den Zinken (7b) des Abstreifrechens (7) gebildete Ebene außerhalb der Ebene der Zinken (12b) des Tragrechens (12) liegt und
- daß die Zinken (12b) des Tragrechens (12) entgegen der Richtung der Transportbewegung hinter die Zinken (7b) des Abstreifrechens (7) zurückziehbar sind.

2. Einrichtung nach Anspruch 1, dadurch gekennzeichnet, daß die Zinken (7b) des Abstreifrechens (7) zu denjenigen (12b) des Tragrechens (12) versetzt angeordnet sind.

3. Einrichtung nach Anspruch 2, dadurch gekennzeichnet, daß die Endabschnitte der Abstreifrechen-Zinken (7) - abgesehen allenfalls von der Rückziehstellung des Tragrechens (12) - zwischen dessen Zinken (12b) liegen.

4. Einrichtung nach zumindest einem der Ansprüche 1 bis 3, dadurch gekennzeichnet, daß die Zinken (7b) des Abstreifrechens (7) zu denjenigen (12b) des Tragrechens (12) senkrecht ausgerichtet sind.

5. Einrichtung nach zumindest einem der Ansprüche 1 bis 4, dadurch gekennzeichnet, daß der Abstreifrechen (7) stufenlos in unterschiedlichen Stellungen an dem Schwenkrahmen (4) feststellbar ist.

6. Einrichtung nach zumindest einem der Ansprüche 1 bis 5, dadurch gekennzeichnet, daß der Tragrechen (12) an Führungsstangen (8) gehalten ist, die in Längsrichtung beweglich an dem Schwenkrahmen (4) gelagert mit einem auch an diesem angreifenden Rechenantrieb (10) ausgestattet sind.

7. Einrichtung nach zumindest einem der Ansprüche 1 bis 6, dadurch gekennzeichnet, daß der Tragrechen (12) mittels eines Druckluftzlinders (10) zurückziehbar ist, dessen Kolben über einen Druckspeicher schlagartig mit Druckluft beaufschlagt werden kann.

8. Einrichtung nach zumindest einem der Ansprüche 1 bis 7, dadurch gekennzeichnet, daß die Oberkanten zumindest der Tragrechen-Zinken (12b) quer zur Längserstreckung des Tragrechens (12) miteinander eine gekrümmte Fläche beschreiben.

9. Einrichtung nach zumindest einem der Ansprüche 1 bis 8, dadurch gekennzeichnet, daß die Zinken des Abstreif- und des Tragrechens (7 bzw. 12) mit PTFE beschichtet sind.

10. Einrichtung nach zumindest einem der Ansprüche 1 bis 9, dadurch gekennzeichnet, daß die Zinken (12b) des Tragrechens (12) zumindest teilweise so weit voneinander entfernt liegen, daß der Durchhang (D) der Preßmasse (13) zwischen den betreffenden Zinken größer ist als die Zinkenhöhe (H).

11. Einrichtung nach zumindest einem der Ansprüche 1 bis 10, dadurch gekennzeichnet, daß die Stellung des Abstreifrechens (7) an dem Schwenkrahmen (4) mittels eines Positionierantriebs veränderbar ist.

FIG.1

EP 0 396 941 A2

FIG. 2

EP 0 396 941 A2

# FIG.3

EP 0 396 941 A2